**Europäisches Patentamt**

**European Patent Office**

**Office européen des brevets**

(19)

(11) Veröffentlichungsnummer: **0 082 352**

**A1**

(12) # EUROPÄISCHE PATENTANMELDUNG

(21) Anmeldenummer: **82110987.3**

(22) Anmeldetag: **27.11.82**

(51) Int. Cl.³: **F 27 B 1/00**
**C 04 B 1/02**

(30) Priorität: **14.12.81 DE 3149493**

(43) Veröffentlichungstag der Anmeldung:
**29.06.83 Patentblatt 83/26**

(84) Benannte Vertragsstaaten:
**AT BE CH FR GB IT LI NL**

(71) Anmelder: **Keramikindustrieanlagen W. Strohmenger GmbH & Co. KG.**
**Erlachweg 6**
**D-8524 Neunkirchen am Brand(DE)** ·

(72) Erfinder: **Plantholt, Wilhelm**
**Dahlweg 2**
**D-4543 Lienen(DE)**

(72) Erfinder: **Strohmenger, Werner**
**Erlachweg 6**
**D-8524 Neunkirchen am Brand(DE)**

(74) Vertreter: **Henfling, Fritz, Dipl.-Ing.**
**Beurhausstrasse 7**
**D-4600 Dortmund 1(DE)**

(54) **Schachtofen zum Brennen von Schüttgütern wie Kalk, Dolomit und dergleichen.**

(57) Bei einem Schachtofen zum Brennen von Schüttgütern wie Kalk, Dolomit und dergleichen mit einem Feststoff-Brennstoffeintrag über Kopf des Ofens wird durch Aufweitung des oberen, die Vorwärmzone bildenden Bereichs (11) des Schachtes und Einbau eines sich bis zum Übergangsbereich (12) von der Vorwärmzone (11) in die Brennzone (13) erstreckenden, zwei Teilschächte (111, 111') für das zu brennende Material belassenden Brennstoffbunkers (112) die unmittelbare Überführung des Brennstoffs in die Brennzone (13) ermöglicht, in der dann auch Entgasungsprodukte des Brennstoffs am Brennprozeß teilnehmen.

EP 0 082 352 A1

./...

Fig. 4

- 1 -

## Schachtofen zum Brennen von Schüttgütern wie Kalk, Dolomit und dergleichen

Die Erfindung betrifft einen Schachtofen mit zumindest im oberen Bereich rechteckigem Schachtquerschnitt, insbesondere zum Brennen von Kalk, mittels festem, von oben in den Schacht einzutragenden Brennstoff, insbesondere Kohle, mit einer Vorwärmzone, einer Brennzone und einer Kühlzone.

Es ist dies an sich die ursprüngliche Form des Schachtofens zum Brennen von Kalk, Dolomit und dergleichen, bei dem das zu brennende Material und der Brennstoff, in der Regel Kohle, von oben in den Schacht eingetragen werden, und das gebrannte Material, das Brenngut, am Boden des Schachtofens abgezogen wird.

Man hat dann zumal aus Kostengründen die Beheizung solcher Schachtöfen ganz oder teilweise umgestellt auf den Einsatz von Öl bzw. Gas. Damit einher ging dann auch der gezielte Eintrag des Brennstoffes in

- 2 -

den Schacht durch die Schachtwandung, vorzugsweise im Bereich der Brennzone. In Ausgestaltung wird dabei dann auch Kohlenstaub durch die Schachtwandung in den Schacht eingetragen. Vorteil dieser Brennstoffzugabe ist es, daß der im Bereich der Brennzone in den Schacht eingetragene Brennstoff vollständig verbrennt und somit optimal ausgenutzt wird. Als weiterer Vorteil ergibt sich, daß das Abgas praktisch CO-frei ist. In jüngerer Zeit ist man zumal aufgrund der Kostenentwicklungen bei den Brennstoffen bestrebt, wieder verstärkt feste Brennstoffe, insbesondere Kohle, einzusetzen und dann . auch nach Möglichkeit in althergebrachter Weise von oben in den Schacht einzutragen, da auch die konstruktiven Maßnahmen zum Eintragen etwa von Kohlenstaub durch die Schachtwandung vergleichsweise aufwendig sind. Bei Rückkehr zur ursprünglichen Form des Brennstoffeintrags zusammen mit dem zu brennenden Material von oben in den Schacht muß allerdings in Kauf genommen werden, daß der Brennstoff nicht vollständig ausgenutzt wird, da der von oben in den Schacht eingetragene Brennstoff in der Vorwärmzone entgast, d.h. flüchtige, an sich brennbare Stoffe abgibt, die am Brennprozeß selbst jedoch nicht teilnehmen. Soweit es sich bei den in der Vorwärmzone anfallenden flüchtigen Bestandteilen um CO handelt, muß weitergehend in Kauf genommen werden, daß das Abgas damit angereichert ist.

Der Erfindung liegt die Aufgabe zugrunde, einen mit festem Brennstoff zu betreibenden Schachtofen, insbesondere zum Brennen von Kalk, bei dem der Brennstoff von oben in den Schacht eingetragen wird, so auszugestalten, daß eine vollständige Ausnutzung des eingesetzten Brennstoffes für den Brennprozeß sichergestellt wird.

Die Aufgabe wird erfindungsgemäß mit einem Schachtofen der eingangs umrissenen Art gelöst, der dadurch gekennzeichnet ist, daß der die Vorwärmzone bildende Bereich des Brennschachtes senkrecht zu einer parallel zu einer Schachtwand verlaufenden Halbierenden gegenüber dem Brennschacht aufgeweitet ist und in den aufgeweiteten Teil zu beiden Seiten der Halbierenden im Abstand von der Halbierenden sich bis zum einfallenden Übergangsbereich von der Vorwärmzone in die Brennzone erstreckende, zwei Teilschächte bildende Zwischenwände eingezogen sind, die zusammen mit einem bodenseitigen Austrag einen in den Ofen integrierten Bunker für den Brennstoff bilden.

Bei dem erfindungsgemäßen Schachtofen werden also sowohl das zu brennende Material als auch der Brennstoff von oben, jedoch getrennt voneinander in den Ofen eingetragen, und zwar das zu brennende Material in die durch den nach der Erfindung vorgesehenen Einbau gebildeten Teilschächte und der Brennstoff in den von dem Einbau gebildeten, sogenannten Bunker, wobei der Brennstoff aus dem sich bis in den Bereich der Brennzone erstreckenden Bunker unmittelbar in die Brennzone gelangt, in der die Mitverbrennung der bei der Entgasung des Brennstoffs anfallenden gasförmigen Bestandteile sichergestellt ist. Der neue

- 4 -

Schachtofen gewährleistet also die angestrebte vollständige Ausnutzung des Brennstoffs. Auch muß eine Belastung des Abgases insbesondere mit CO nicht mehr in Kauf genommen werden. Als weiterer Vorteil ergibt sich, daß wohlfeilere, gasreichere Fettkohle eingesetzt werden kann.

Der freie Querschnitt des Brennstoffbunkers und damit dann auch der des Bestandteil des Bunkers bildenden Austrags entspricht zweckmäßigerweise im wesentlichen dem freien Querschnitt des Brennschachtes im Bereich der Brennzone, um eine gleichmäßige Verteilung des Brennstoffes über den wirksamen Schachtquerschnitt zu gewährleisten.

Ein in den aus feuerfestem Material bestehenden Brennstoffbunker eingefügter Einsatz aus Stahlblech verhindert das Ansetzen des Brennstoffs an der Wandung des Bunkers.

Der Bestandteil des erfindungsgemäß vorgesehenen Brennstoffbunkers bildende Brennstoffaustrag ist zweckmäßigerweise als Dosiervorrichtung ausgestaltet, die eine gezielte Brennstoffzugabe ermöglicht.

Als Dosiervorrichtung empfiehlt sich eine Mehrzahl von von einem Zwischenboden im Bunker ausgehenden, regelmäßig über den Boden verteilten, sich durch den Boden des Einsatzes erstreckenden, beidseitig verschließbaren Dosierschächten. Insbesondere für den eintragsseitigen Verschluß der Dosierschächte bieten sich Schieberverschlüsse an, austragsseitig sind vorzugsweise Drehklappen vorzusehen.

Unter den Austragsöffnungen vorgesehene Verteilerkegel
stellen eine gleichmäßige Verteilung des Brennstoffes
sicher.

In der Zeichnung ist die Erfindung anhand eines in
ganz schematischer Weise dargestellten Ausführungsbeispieles weitergehend erläutert. Es zeigen:

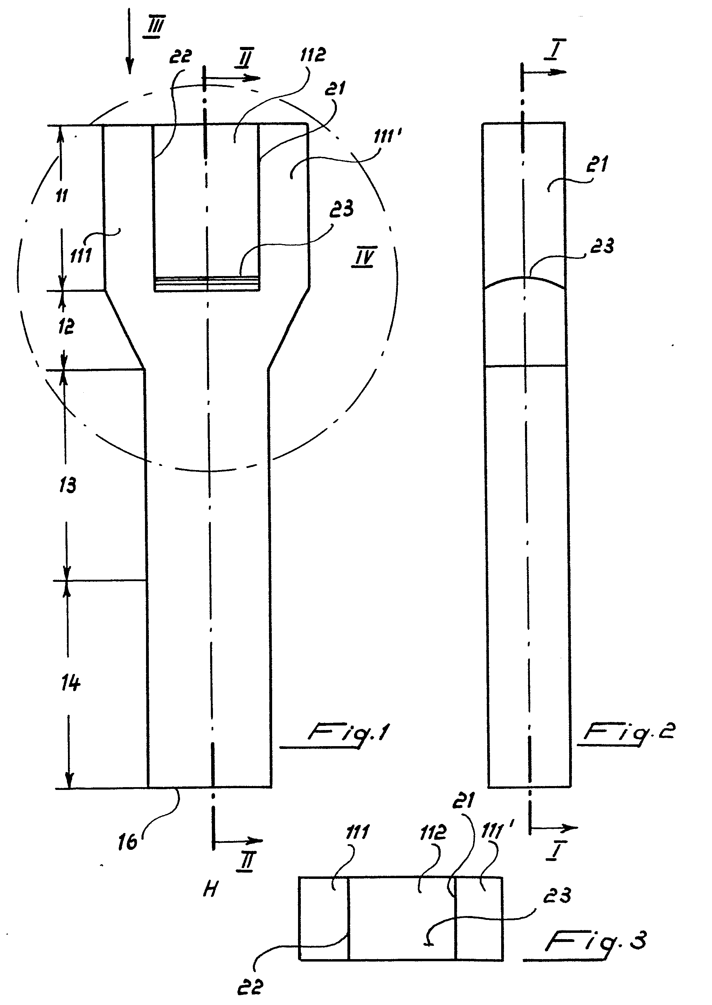

Figur 1    einen Schnitt durch den erfindungsgemäß ausgestalteten Brennschacht nach
Linie I-I in Figur 2

Figur 2    einen Schnitt durch den Schacht nach
Linie II-II in Figur 1

Figur 3    eine Draufsicht auf den Schacht in
Richtung des Pfeiles III in Figur 1

Figur 4    den Ausschnitt IV in Figur 1 mit Details in größerem Maßstab.

Der einen rechteckigen Querschnitt aufweisende Brennschacht ist im oberen Teil 11 erfindungsgemäß senkrecht zur parallel zu den kürzeren Schachtwänden verlaufenden Halbierenden H aufgeweitet, und in den aufgeweiteten Teil 11 sind im Abstand von der Halbierenden H sich zwischen den kürzeren Schachtwänden erstreckende Zwischenwände 21, 22 eingezogen, die sich
bis zum einfallenden Übergangsbereich 12 vom aufgeweiteten Teil 11 des Brennschachtes in den unteren
Teil 13, 14 des Schachtes mit normalem Querschnitt
erstrecken. In Verbindung mit einem, den von ihnen umgebenen Raum nach unten begrenzenden Austrag 23 bilden die Zwischenwände 21, 22 einen Bunker 112 für über Kopf des Schachtes einzutragenden Brennstoff, während das zu brennende Material über Kopf des Schachtes in die durch die Zwischenwände 21,22 gebildeten Teilschächte 111,111' eingetragen wird.

Das zu brennende Material wandert durch die die Vorwärmzone bildenden Teilschächte 111,111' und gelangt über den Übergangsbereich 12 in die Brennzone 13, an die sich die sich bis zum Austrag 16 erstreckende Kühlzone 14 anschließt. Der im Bunker 111 befindliche Brennstoff gelangt durch den Bunkeraustrag 23 unmittelbar in die Brennzone 13, wodurch eine vollständige Ausnutzung des Brennstoffs für den Brennprozeß gewährleistet wird.

Der Eintrag des zu brennenden Materials in den Ofen erfolgt über Schleusen verwendende Gichtverschlüsse bekannter Bauart, die dann auch eine gezielte Ableitung bzw. Absaugung des Abgases zulassen. Für den Eintrag des Brennstoffes in den integrierten Bestandteil des Ofens bildenden Bunker ist im Sinne der Erfindung eine gesonderte, den Bunker beaufschlagende Förderanlage vorgesehen. Der Austrag des Brenngutes aus dem Ofen erfolgt über bekannte Austragsvorrichtungen.

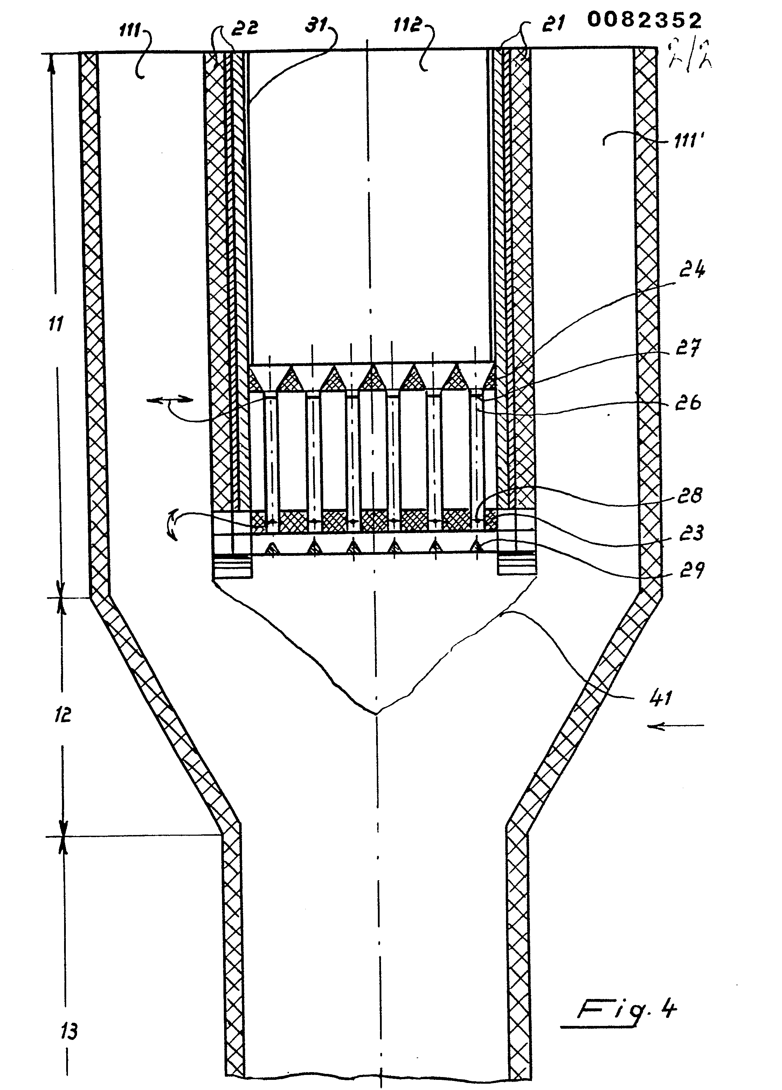

In Ausgestaltung ist für die dosierte Zugabe des Brennstoffs eine Bestandteil des Bunkers 112 bildende, in Figur 4 skizzierte Dosiervorrichtung vorgesehen. Hierfür ist der Bunker zusätzlich zum Boden 23 mit einem Zwischenboden 24 versehen. Zwischen beiden Böden 23,24 erstrecken sich sich in den Böden 23,24 führende beidseitig verschließbare Rohre 26, die gleichmäßig über den freien Querschnitt des Bunkers 112 verteilt sind. Als oberer Verschluß für die Dosierrohre bieten sich insbesondere Schieberverschlüsse 27 an, für den unteren Verschluß der Dosierrohre insbesondere Drehklappen 28. Unterhalb der Dosierrohre vorgesehene Verteilerkegel 29 stellen die gleichmäßige Verteilung des Brennstoffes über den freien Schachtquerschnitt sicher.

Die Bunkerwandungen 21, 22, 23, 24 bestehen ebenso wie die Brennschachtauskleidung aus feuerfestem Material. Ein Stahlblecheinsatz 31 im Bunker 112 verhindert das Anbacken des Brennstoffs, in der Regel Kohle, an der Bunkerwandung.

Mit 41 ist der Verlauf der Schüttung im Übergangsbereich 12 des Brennofens nach der Erfindung angedeutet.

0082352

- 1 -

Patentansprüche:

1. Schachtofen mit zumindest im oberen Bereich rechteckigem Schachtquerschnitt insbesondere zum Brennen von Kalk mittels festem, von oben in den Schacht einzutragenden Brennstoff, insbesondere Kohle, mit einer Vorwärmzone, einer Brennzone und einer Kühlzone, dadurch gekennzeichnet, daß der die Vorwärmzone (11) bildende Bereich des Brennschachtes senkrecht zu einer parallel zu einer Schachtwand verlaufenden Halbierenden (H) gegenüber dem Brennschacht aufgeweitet ist und in dem aufgeweiteten Teil zu beiden Seiten der Halbierenden (H), im Abstand von der Halbierenden (H) sich bis zum einfallenden Übergangsbereich (12) von der Vorwärmzone (11) in die Brennzone (13) erstreckende, zwei Teilschächte (111,111') bildende Zwischenwände (21,22) eingezogen sind, die zusammen mit einem bodenseitigen Austrag (23) einen in den Schacht integrierten Bunker (112) für den Brennstoff bilden.

2. Schachtofen nach Anspruch 1, dadurch gekennzeichnet, daß der freie Querschnitt des Bestandteil des Brennstoffbunkers (111) bildenden Brennstoffaus- trags (23) im wesentlichen dem des Brennschachtes im Bereich der Brennzone (13) entspricht.

3. Schachtofen nach den Ansprüchen 1 und 2, gekennzeichnet durch einen in den Brennstoffbunker (111) eingefügten Stahlblecheinsatz (31).

4. Schachtofen nach den Ansprüchen 1 bis 3, gekennzeichnet durch eine Bestandteil des Brennstoffaustrags (23) bildende Dosiervorrichtung für den Brennstoff.

5. Schachtofen nach Anspruch 4, dadurch gekennzeichnet, daß der Brennstoffaustrag aus einen in den Brennstoffbunker (111) eingezogenen Zwischenboden (24) besteht, von dem eine Mehrzahl von regelmäßig über den freien Querschnitt des Bunkers (111) verteilten, sich in den Böden (23,24) des Bunkers (111) führenden, beidseitig verschließbaren Dosierschächten (26) ausgeht.

6. Schachtofen nach den Ansprüchen 3 und 4, gekennzeichnet durch Schieberverschlüsse (27) für die Dosierschächte (26).

7. Schachtofen nach den Ansprüchen 3 und 4, gekennzeichnet durch Verschlüsse (28) für die Dosierschächte (26) nach Art von Drehklappen.

8. Schachtofen nach den Ansprüchen 1 bis 6, gekennzeichnet durch unter den Austragsöffnungen der Dosierschächte (26) vorgesehene Verteilerkegel (29).

0082352

1/2

Fig.1

Fig.2

Fig.3

0082352

111 22 31 112 21

111'

24
27
26

28
23
29

41

11

12

13

*Fig. 4*

| | | |
|---|---|---|

Europäisches Patentamt

# EUROPÄISCHER RECHERCHENBERICHT

**0082352**
Nummer der Anmeldung

EP 82 11 0987

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| Y | US-A-2 814 478  (W. VAN LOON)<br>* Abbildung; Ansprüche *<br><br>--- | 1,2 | F 27 B    1/00<br>C 04 B    2/12 |
| Y | DE-A-2 917 158  (PREROVSKE STROJIRNY)<br>* Abbildungen; Ansprüche *<br><br>--- | 1 | |
| Y | BE-A-  561 834  (WESTDEUTSCHE KALK- UND PORTLANDZEMENTWERKE AG)<br><br>--- | 1 | |
| A | DE-C-  305 459  (STEIGER et al.)<br><br>--- | | |
| A | DE-C-  667 742  (A. ESBJÖRNSSON)<br><br>--- | | RECHERCHIERTE SACHGEBIETE (Int. Cl. ³) |
| A | GB-A-1 132 320<br>(HARBISON-WALKER)<br><br>--- | | F 27 B<br>C 04 B |
| A | FR-A-  663 106  (BELLAY)<br><br>--- | | |
| A | DE-C-  946 216  (SEEGER)<br><br>----- | | |

Der vorliegende Recherchenbericht wurde für alle Patentansprüche erstellt.

| Recherchenort<br>DEN HAAG | Abschlußdatum der Recherche<br>15-03-1983 | Prüfer<br>OBERWALLENEY R.P.L.I |
|---|---|---|